# EUROPEAN PATENT APPLICATION

(11) **EP 3 428 227 A1**
(43) Date of publication of application: **16.01.2019**
(21) Application number: 17181374.4
(22) Date of filing: 14.07.2017
(51) Int. Cl.: C08K 5/103, C08K 5/06

(54) **ANTI-FOG AGENT**

(71) Applicant: Akzo Nobel Chemicals International B.V., 6824 BM Arnhem (NL)
(72) Inventor: SPIJKERMAN, Geesje Klasina, NL-7421 AS Deventer (NL); ROOLVINK-VERHAAGEN, Maatje Gerharda, NL-7425 HN Deventer (NL)
(74) Representative: Akzo Nobel Chemicals IP Group

(57) **Abstract**

Antifog agent with improved light transparancy, comprising at least one ethoxylated glycerol fatty acid ester and at least one ethoxylated alcohol.

## Description

This invention relates to the prevention of fogging on the surface of polymeric films.

Polyolefins, such as polyethylene, are used in various agricultural applications, such as greenhouse covers and energy screens. Polyolefins have a high resistance to moisture vapour transmission and high transparency, which is evidently essential for agricultural applications.
However, due to temperature changes, any water that evaporates from the soil or plants starts to condense on the inner surface of the polyolefin film. The water droplets form a fogged surface, thereby reducing the visual transparency of the film. This effect is generally called "fogging" or "clouding". Fogging leads to reduced light transmission, which negatively affects the growth of crops covered by said film.

In order to reduce fogging of polyolefin films, so-called antifog agents can be added to the polyolefin. These antifog agents can be coated on the polyolefin film, or they can be incorporated in the polyolefin film. Incorporation in the film is generally preferred over coating on the film because of the lower processing costs, the lower environmental impact (i.e. no coating solvents required), and the absence of a separate layer that can be wiped or washed off the surface. Examples of known antifog agents for incorporation in polyolefin films are monoglycerol esters of fatty acids, sorbitan esters of fatty acids, and combinations thereof.

The antifog action of the incorporated antifog agents is most likely due to the migration of the antifog agent to the film's surface, thereby enhancing the hydrophilicity of the surface and decreasing the surface tension of the water, which causes the water to form a continuous, visually clear film instead of a fogged surface comprising individual droplets of water.

Fogging may occur under relatively cold conditions (below ambient temperature, such as refrigerator or cold outside conditions) and relatively warm conditions (above ambient temperature, e.g. in warm humid outside conditions). The first are called cold fog conditions; the second are called hot fog conditions.

The use of ethoxylated glycerol fatty acid esters as antifog agent in agricultural films is known from WO 2016/062684. This document discloses the use of ethoxylated glycerol fatty acid esters as antifog agent in agricultural films. The degree of ethoxylation of these esters is 1.0-5.0, preferably 1.0-3.0.
Although ethoxylated glycerol fatty acid esters provide good antifog properties, there is room for improvement when it comes to the light transparency of films comprising this antifog agent.

It has now been found that the addition of ethoxylated alcohol improves the light transparency of films that comprise ethoxylated glycerol fatty acid esters. It is theorized that the ethoxylated alcohol inhibits the crystallisation of ethoxylated glycerol fatty acid ester in the film, thereby keeping the film transparent.

The present invention therefore relates to an antifog agent comprising:
- at least one ethoxylated glycerol fatty acid ester and
- at least one ethoxylated alcohol.

The ethoxylated glycerol fatty acid ester concentration in the antifog agent according to the present invention is preferably in the range 40-85 wt%, more preferably 50-80 wt%, and most preferably 60-70 wt%.

The ethoxylated alcohol concentration in the antifog agent according to the present invention is preferably in the range 15-60 wt%, more preferably 20-50 wt%, and most preferably 30-40 wt%.
In a preferred embodiment, the antifog agent consists of one or more of the above-mentioned compounds, meaning that it contains no other compounds than the indicated ones and that the weight percentages of the two types of compounds add up to 100 wt%.

The antifog agent can have the form of a simple mixture of the ingredients, but may also be present in a masterbatch, i.e. a dispersion of the above compounds in a polymeric matrix. Such masterbatch preferably comprises the antifog agent in a concentration of 5-70 wt%, more preferably 10-50 wt%, most preferably 20-40 wt%.
Suitable polymers for such polymeric matrix are polyethylene, polypropylene (PP), random- and block-copolymers of ethylene and propylene, ethylene vinyl acetate copolymer (EVA), and polymers obtained from ethylene or propylene copolymerized with minimal amounts of other mono-olefinic monomers such as butene, isobutylene, acrylic acids, esters of acrylic acids, styrene or combinations thereof. Preferred polyolefins are LLDPE, LDPE, EVA, and polymer blends containing LDPE and/or EVA. Most preferred is EVA, more in particular EVA with a vinyl acetate content 0.10-30 wt%.

The invention also relates to a polymeric film or sheet comprising said antifog agent and its use for agricultural applications.
The polymeric film preferably comprises 0.25-5.0 wt% ethoxylated glycerol fatty acid ester, and 0.1-2.5 wt% ethoxylated alcohol.

The agricultural film according to the present invention preferably has a visible light transmission of at least 50%, more preferably 60%, even more preferably at least 75%, and most preferably at least 80%. Visible light is defined as light with a wavelength in the range 380-770 nm. The visible light transmission of the film is determined by spectrophotometry.

The ethoxylated glycerol fatty acid ester can be prepared by ethoxylation of a glycerol fatty acid ester. Ethoxylation processes are well known to those skilled in the art and preferably involve the treatment of molten ester with ethylene oxide under high pressure and temperature in the presence of a base catalyst. During this process, initial mono-glycerol esters may react to form di- and tri-glycerol esters and glycerol. Likewise, di-glycerol esters may react to form mono- and tri-glycerol esters and glycerol, etc. Essentially all these components will be ethoxylated during the process.
The average degree of ethoxylation of the resulting material can be controlled by the amount ethylene oxide, as is also well known by the skilled person.
Hence, the glycerol esters generally will consist of a mixture of glycerol esters, which mixture has been ethoxylated to a certain average degree of ethoxylation.

The molar average degree of ethoxylation of the glycerol ester(s) is preferably in the range of 1.0 to below 5.0, which means that the product obtained by the ethoxylation reaction contains, on average, 1.0 to less than 5.0 mole of ethylene oxide per mole of initial glycerol ester. More preferably, the molar average degree of ethoxylation of the glycerol ester(s) is in the range 1.0-4.0, even more preferably 1.0-3.0, and most preferably 2.0-3.0.
The average degree of ethoxylation can be determined by determining the hydroxyl value of the material. This value can be determined by a titration method. According to this method, a solution of phthalic anhydride in pyridine is added to a sample of ethoxylated glycerol ester. Hydroxyl groups in the sample react under enhanced temperature with phthalic anhydride. The reaction is catalysed by 4-dimethyl-aminopyridine. The phthalic anhydride that has not been consumed by the sample and the acid that has formed are determined by titration with alkali. Also the total added amount of phthalic anhydride in a blank solution is determined in this way. The results allow the calculation of free OH-functionalities in the sample, from which the number of moles of ethoxylated product can be calculated. With the sample weight one can calculate the average molecular weight and, hence, the average number of moles of ethylene oxide groups per mole of initial glycerol ester.

The glycerol esters to be ethoxylated can be prepared by known procedures, such as the glycerolysis of natural oils or fats, which are generally mixtures of various fatty acid triglycerides. This process leads to a complex mixture of alpha- and beta-monoglycerides, diglycerides, traces of triglycerides, and free fatty acids. The components of such mixtures can be separated by suitable distillation procedures.
Suitable oils and fats are beef tallow, mutton tallow, butter fat, coconut oil, corn oil, cotton seed oil, lard oil, olive oil, peanut oil, palm oil, soy bean oil, sesame oil, sunflower oil, rapeseed oil, and their partial or fully hydrogenated derivatives. Commercially available glycerol mono-esters generally contain traces of preservatives, free glycerol, free fatty acids, and glycerol di- and tri-esters.

The fatty acid-originating part of the glycerol ester has 12 to 22 carbon atoms, preferably 14 to 20 carbon atoms, and most preferably 16 to 18 carbon atoms. The fatty acid may be substituted with hydroxy groups. The fatty acid may be saturated or unsaturated, although saturated fatty acids are preferred. Examples of saturated fatty acids with 12 to 22 carbon atoms are lauric acid (C12), myristic acid (C14), palmitic acid (C16), stearic acid (C18), hydrogenated ricinoleic acid (C18), arachidic acid (C20), and behenic acid (C22).
The glycerol esters to be ethoxyalated can be esters of monoglycerol, diglycerol, and polyglycerol. It may also be mixtures of glycerol esters of different saturated fatty acids, e.g. fatty acids with 16 and with 18 carbon atoms.

The glycerol esters to be ethoxyalated can be mono-esters, di-esters, tri-esters, and mixtures thereof. In a preferred embodiment, 20-90 wt%, more preferably 30-80 wt%, even more preferably 40-70 wt%, and most preferably 40-60 wt% - of such the mixture of glycerol esters consists of mono-esters.
In a preferred embodiment, the ethoxylated glycerol fatty acid ester will comprise 20-90 wt%, more preferably 30-80 wt%, even more preferably 40-70 wt%, and most preferably 40-60 wt% of glycerol monostearate ethoxylated with, on average, 1.0 to below 5.0 mole% of ethylene oxide groups.

The ethoxylated alcohol can be prepared by ethoxylation of an alcohol. The average degree of ethoxylation of the resulting material can be controlled by the amount ethylene oxide, as is also well known by the skilled person.

The molar average degree of ethoxylation of the alcohol is preferably in the range of 0.5 to 10, which means that the product obtained by the ethoxylation reaction contains, on average, 0.5 to 10 mole of ethylene oxide per mole of alcohol. This average degree of ethoxylation can be determined by determining the hydroxyl value of the material, as described above.
More preferably, the alcohol has a molar average degree of ethoxylation in the range 1.0-7.0, most preferably 1.0-5.0.

The alcohol preferably has 8 to 22 carbon atoms, preferably 10 to 20 carbon atoms, and most preferably 12 to 18 carbon atoms. The alcohol may be substituted with hydroxy groups. The alcohol may be saturated or unsaturated, although saturated alcohols are preferred. Examples of saturated alcohols with 8 to 22 carbon atoms are capryl alcohol, decyl alcohol, lauryl alcohol, tridecyl alcohol, myristyl alcohol, cetyl alcohol, palmitoyl alcohol, stearyl alcohol, arachidyl alcohol, behenyl alcohol, and erucyl alcohol.

The antifog agent according to the present invention may contain one or a mixture of two or more ethoxylated alcohols.

The antifog agent can be incorporated in a polymeric film or sheet by first mixing it into molten polymer (preferably a polyolefin) using conventional techniques, such as extrusion, roll-milling or mixing in a Banbury mixer. The antifog agent may be added to the polymer before or after said polymer has been melted. It may be added as such, or in the form of a masterbatch. The resulting composition is then solidified by cooling and then comminuted to a particle size satisfactory for further form shaping processes like blown film extrusion, cast film extrusion, hot melt extrusion, or equivalent heat-shaping operations.
It is also possible to incorporate this polymer-antifog agent composition into a multi-layer system. Such a multi-layer system will contain at least one layer made from this composition. Other layers of such a multi-layer system may be based on, for instance, polyamide (e.g. nylon) and/or polyester (e.g. polyethylene terephthalate).
Multi-layer systems can be prepared by co-extrusion or lamination.

Suitable polymers for making said sheets or films are polyolefins. Examples of suitable polyolefins are polyethylene, polypropylene (PP), random- and block-copolymers of ethylene and propylene, ethylene vinyl acetate copolymer (EVA), and polymers obtained from ethylene or propylene copolymerized with minimal amounts of other mono-olefinic monomers such as butene, isobutylene, acrylic acids, esters of acrylic acids, styrene or combinations thereof.
Polyethylenes include high density polyethylene (HDPE; defined by a density of greater or equal to 0.941 g/cm³), medium density polyethylene (MDPE; defined by a density range of 0.926-0.940 g/cm³), linear low density polyethylene (LLDPE; defined by a density range of 0.915-0.925 g/cm³), low density polyethylene (LDPE; defined by a density range of 0.910-0.940 g/cm³), very low density polyethylene (VLDPE; defined by a density range of 0.880-0.915 g/cm³), and blends thereof.
Suitable polyethylenes can be made by radical polymerisation or by metallocene or Ziegler Natta-catalysed polymerisation and also includes blends of such differently polymerised polyethylenes.
Preferred polyolefins are LLDPE, LDPE, EVA, and polymer blends containing LDPE and/or EVA. Most preferred is EVA, more in particular EVA with a vinyl acetate content 0.10-30 wt%.

The antifog agent is incorporated in the polymer in an amount sufficient to impart fog resistance to the film. If an excess amount of antifog agent is incorporated in the polyolefin, the polyolefin tends to be tacky and has a greasy feel. The blocking and slip properties of the resulting agricultural film may also be adversely affected. Moreover, an excess of antifog agent in the film adversely affects the adhesion of inks thereto.
The antifog agent is therefore incorporated in the polymeric film or sheet an amount of 0.25-5.0 wt%, preferably 0.5-4.0 wt%, and most preferably 1.0-3.0 wt% ethoxylated glycerol fatty acid ester, and 0.1-2.5 wt%, preferably 0.25-2.0 wt%, and most preferably 0.25-1.5 wt% ethoxylated alcohol.

In addition to the antifog agent, the polymeric film or sheet may contain various conventional additives, such as anti-static agents, anti-oxidants, anti-ozonants, slip agents, anti-block agents, light stabilizers (e.g. HALS), UV stabilizers, colorants, tackifiers, and the like, if so desired. Specific examples of additives are ethylene bis-stearamide and ethylene bis-oleamide.

The polymeric film or sheet containing the antifog agent can be used as or as part of an agricultural film.
The agricultural film preferably has a visible light transmission of at least 50%, more preferably 60%, even more preferably at least 75%, and most preferably at least 80%. Visible light is defined as light with a wavelength in the range 380-770 nm. The visible light transmission of the film is determined by spectrophotometry.
The agricultural film should therefore preferably be essentially free of compounds that severely hinder the transmission of visible light through the resulting film. Examples of such compounds are carbon black and other carbon-based materials.
The agricultural film can be used for various agricultural applications, such as energy screens and greenhouse covers.

### EXAMPLES

### Test methods

### Hot fog test:

Beakers of 600 ml (high model, 150 mm, 80 mm ø, without spout) were filled with 350 ml of tap water. Films prepared according to the Examples below were cut and placed on the beaker and fixed with a rubber band. The beakers were placed in a water bath at 40°C and fog was determined visually after 5, 10, 15 and 30 minutes and after 1, 2 and 5 hours on the first day; and once a day thereafter.

The Fog Score is the best result obtained over time. It was scored according to the following system:
1 - <3: Opaque layer of small fog droplets
3 - <5: Opaque layer of large droplets
5 - <7: Complete layer of large transparent drops
7 - <8: Randomly scattered or only large transparent droplet(s)/ discontinuous film of water
8: Transparent film having no visible water

Scores within each score range further refine the visibility: the higher the score, the better the visibility.

Transparency of the film was judged visually and rated from very good (++) to very bad (--).

### Example 1

To an ethylene-vinyl acetate copolymer (EVA, 7.5 wt% vinyl acetate, MFI= 3 g/10 min), 2 wt% of a blend of (i) ethoxylated glycerol monostearate (GMS) with an average degree of ethoxylation of 2.5 and (ii) a C₁₂₋₁₆ alcohol mixture with an average degree of ethoxylation of 3.0 was added using a 16 mm twin screw extruder at 160-200 °C (die). The weight ratios between these two components of the blend varried (see Table 1)
This composition was shaped to form a film using film blowing equipment at 170-190 °C.

The resulting film had hot fog score above 8 and a better visual transparency than a film made in the same way but without the ethoxylated alcohol; see Table 1.

**Table 1**

| Weight ratio | | transparency |
|---|---|---|
| GMS | Ethoxylated alcohol | |
| 100 | -- | -- |
| 75 | 25 | - |
| 60 | 40 | + |
| 50 | 50 | + |
| 25 | 75 | ++ |

### Example 2

Example 1 was repeated, expect that 2.5 wt% of a blend of (i) ethoxylated glycerol monostearate (GMS) with an average degree of ethoxylation of 2.5 and (ii) a C₁₆₋₁₈ alcohol mixture with an average degree of ethoxylation of 2.0 was used, in a weight ratio GMS/ethoxylated alcohol of 60/40.
The resulting film had hot fog score above 8 and the transparency was rated +.

### Example 3

Example 1 was repeated, expect that 2.5 wt% of a blend of (i) ethoxylated glycerol monostearate (GMS) with an average degree of ethoxylation of 2.5 and (ii) a branched C₁₃ alcohol with an average degree of ethoxylation of 2.8 was used, in a weight ratio GMS/ethoxylated alcohol of 60/40.
The resulting film had hot fog score above 8 and the transparency was rated +.

### Comparative Example 1

Example 1 was repeated, expect that, instead of the ethoxylated alcohol, glycerol tristearate (GTS) was used, in a weight ratio GMS/GTS of 75/25.
The transparency of the resulting film was rated -.

### Comparative Example 2

Example 1 was repeated, expect that, instead of the ethoxylated alcohol, a C₁₆₋₁₈ polyglycerolester (PGE) was used, in a weight ratio GMS/PGE of 75/25.
The transparency of the resulting film was rated -.

## Claims

1. Antifog agent comprising:
- at least one ethoxylated glycerol fatty acid ester and
- at least one ethoxylated alcohol.

2. Antifog agent according to claim 1 wherein the ethoxylated glycerol fatty acid ester comprises ethoxylated glycerol monostearate.

3. Antifog agent according to claim 1 or 2 wherein the ethoxylated glycerol fatty acid ester has an average degree of ethoxylation of 1.0-5.0 ethylene oxide groups per glycerol ester unit.

4. Antifog agent according to any one of the preceding claims wherein the ethoxylated alcohol is a saturated alcohol with 8 to 22 carbon atoms, preferably 12 to 18 carbon atoms

5. Antifog agent according to any one of the preceding claims wherein the ethoxylated alcohol has an average degree of ethoxylation of 0.5-10, preferably 1.0-5.0 ethylene oxide groups per glycerol ester unit.

6. Antifog agent according to any one of the preceding claims wherein the ethoxylated glycerol fatty acid ester concentration in the antifog agent is 40-85 wt%.

7. Antifog agent according to any one of the preceding claims wherein the ethoxylated alcohol concentration in the antifog agent is 15-60 wt%.

8. Masterbatch of an antifog agent comprising 5-70 wt% of the antifog agent of any one of the preceding claims and 30-95 wt% of a polymeric matrix.

9. Masterbatch according to claim 10 wherein the polymeric matrix comprises ethylene vinyl acetate copolymer (EVA), low density polyethylene (LDPE), linear low density polyethylene (LLDPE), and/or blends thereof.

10. Polymeric film or sheet comprising the antifog agent of any one of claim 1 - 7.

11. Polymeric film or sheet according to claim 12 wherein the polymeric film or sheet comprises:
- 0.25-5.0 wt% ethoxylated glycerol fatty acid ester, and
- 0.1-2.5 wt% ethoxylated alcohol.

12. Polymeric film or sheet according to claim 10 or 11 wherein the polymeric film or sheet is made from a polymer selected from the group consisting of ethylene vinyl acetate copolymer (EVA), low density polyethylene (LDPE), linear low density polyethylene (LLDPE), and blends thereof.

13. Agricultural film or sheet comprising the polymeric film or sheet according to any one of claims 10-12.

14. Use of the agricultural film or sheet according to claim 13 as greenhouse cover.

15. Use of the agricultural film or sheet according to claim 13 as energy screen.
